# EUROPEAN PATENT APPLICATION

(11) **EP 2 561 761 A1**
(43) Date of publication of application: **27.02.2013**
(21) Application number: 10850352.5
(22) Date of filing: 09.06.2010
(51) Int. Cl.: A21D 13/08, A21D 8/00

(54) **METHOD FOR MANUFACTURING CRACKERS FROM THIN ARMENIAN LAVASH BREAD (EMBODIMENTS)**

(30) Priority: 19.04.2010 UA 2010004486
(71) Applicant: Khachatrian, Gukas Sarkisovich, Kiev 03187 (UA)
(72) Inventor: Khachatrian, Gukas Sarkisovich, Kiev 03187 (UA)
(74) Representative: Benatov, Emil Gabriel
(86) International application number: PCT/UA2010/000029
(87) International publication number: WO 2011/133124

(57) **Abstract**

The invention relates to the food industry. The method for manufacturing crackers from thin Armenian lavash bread comprises shaping and preparing a dough blank in the form of a flat strip, rolling the blank out into predetermined shapes and stretching it width wise. The blank is then cut into small pieces of predetermined shape and these are passed to proofing, after which they are baked. After baking, the finished articles are cooled to a temperature of 18-25 DEG C, then additionally moistened with water or oil, food or flavouring additives are added, the structure of the three-dimensional articles is cooled to a temperature of 18-25 DEG C, and the latter are dried to a relative humidity of 0-20%. The finished articles are packaged.

## Description

### Technical Field

The invention relates in general to the art of food industry, particularly to the industrial sector of foodstuffs, and is specifically concerned with manufacturing various flat and three-dimensional hollow crackers from thin Armenian lavash bread.

### Background Art

The present method comprises preparing dough, shaping a dough blank in the form of flat lavash strips, baking and drying in the oven, cutting into separate finished articles in the form of crackers, cooling and packaging (see Patent of Ukraine No.83945 dated 26.08.2008, IPC A21D 8/06, A21B 7/00).

One of the drawbacks of the present method is the limitedness of organoleptic properties, particularly gustatory, and consumer-oriented properties of the crackers, which is the result of the paucity of manufacturing capabilities necessary for obtaining a wide assortment of finished articles in the form of three-dimensional hollow crackers.

In the art is well-known an automated line for manufacturing thin Armenian lavash bread, which involves forming a flat lavash dough blank, rolling the blank out to a predetermined width, cutting the blank by means of shear mechanisms and removing the rest pieces, if necessary, to the area where the blank is formed initially, baking in the tunnel oven with heating elements, cooling obligatorily and moistening the lavash bread surface, stabilising the structure thereof and packaging (see Patent of Ukraine No. 89730 dated 25.02.2010, IPC A21B 5/00).

The drawbacks of the said automated line for manufacturing thin Armenian lavash bread are the impossibility to get small three-dimensional lavash crackers and the reduced organoleptic and consumer-oriented properties.

### Summary of the Invention

It is the primary object of the present invention to create the method for manufacturing products from thin Armenian lavash bread, to provide more organoleptic properties, particularly gustatory, and consumer-oriented properties of finished articles, and to expand the manufacturing capabilities of the method in order to gain a broader range of products.

Accordingly, the above-mentioned object is achieved through the realization of the new method for manufacturing crackers from thin Armenian lavash bread, which consists in making and forming a flat dough blank strip, rolling out the blank to a predetermined form, cutting the blank by means of shear mechanisms and returning the rest pieces, if necessary, to the area where the dough blank is formed initially, baking, cooling, moistening the product's surface, and packaging. According to the invention, the strip dough blank is additionally stretched width wise and cut into small pieces of the specified form. Further, the last-named blank pieces are passed to proofing, after which they are baked and cooled to a temperature of 18-25°C, then moistened with water or oil, food or flavouring additives are added, the structure of the three-dimensional articles is cooled to a temperature of 18-25°C, and the latter are dried to a relative humidity of 0-20%.

Besides, two strips of flat dough blank, the surfaces thereof being floured, are supplied simultaneously and are joined one to another and thus form a two-layer dough blank which is further cut into smaller pieces and the edges of these pieces are stuck together in the process of cutting, then the given method of manufacturing is realized.

These features make it possible to manufacture a high-quality finished article with uniform thickness of walls thereof, which improves organoleptic and consumer-oriented properties of the manufactured crackers. Afterwards, the strip dough blank surface is completely pierced, then it is cut into small flat pieces of the predetermined shape, and these are passed to proofing after which they are baked. Subsequent to baking, the finished articles are cooled to a temperature of 18-25°C, then additionally moistened with water or oil, food or flavouring additives are added, the structure of the flat articles is cooled to a temperature of 18-25°C, and the latter are dried to a relative humidity of 0-20%.

Besides, both three-dimensional and flat crackers are made of unleavened, yeast-leavened or sponge dough in the shape of circle, rectangle, triangle, oval, sphere, ellipsoid, cube, cushion and other non-geometric forms.

The use of present method serves to obtain various shapes of the end products, to fill the latter in with different foodstuffs, and to get a wide spectrum of gustatory qualities of the manufactured crackers being safe products for human's health.

### Detailed Description of the Embodiments

The claimed invention is described in terms of specific embodiments represented below.

### Embodiment 1

To implement the claimed method for manufacturing thin Armenian lavash bread, the technology of automated line is employed, which is described as follows. Previously prepared dough is used to form a flat lavash blank which is successively rolled out to the thickness of 0.5-1.5mm with further stretching it to the specified width. Before baking, the dough blank is cut into small pieces of predetermined shape for crackers to be made. When the curvilinear-shaped dough blank pieces are manufactured, the rest pieces are returned to the area where the blank is formed initially. The cracker blanks separated in such a way are passed to proofing. In the process of the latter, the structure of dough blanks is renewed and the porosity thereof is formed on account of increased gasification which leads to the volume gain in every piece of cracker blanks.

In the course of baking, due to the porosity of blank structure, three-dimensional hollow crackers are formed, the structure of which is cooled to a temperature of 18-250C.

Further, after the cooling, the surfaces of crackers are moistened with water or oil by means of sprayers, food and/or flavouring additives are added. Subsequently, the structure of the three-dimensional product ,with sprayed over food and/or flavouring additives, is cooled to a temperature of 18-25°C, and is dried to a relative humidity of 0-20%. Finally, the finished articles are packaged.

As an option for the customer, three-dimensional crackers can be filled in with some foodstuffs or their mixtures.

### Embodiment 2

To implement the claimed method in its second embodiment, the technology of automated lines is employed as well, but thin Armenian lavash bread is manufactured simultaneously on two lines, which is described as follows. Previously prepared dough is used to form flat lavash blanks on both automated lines. The dough blanks are successively rolled out to the thickness of 0.5-1.5mm with further stretching them to the specified width. In the process of manufacturing, the formed strip dough blanks are sprinkled with flour and thereafter they are joined one to another. The formed two-layer dough blank is processed like in the first embodiment, namely, it is cut into small pieces of specified shape by means of shear mechanisms. And in the course of cutting, on account of the pressure from a special shear mechanism on the dough blanks and the presence of flour between the layers of blanks, the edges of blanks are stuck together. When the curvilinear-shaped dough blank pieces are manufactured, the rest pieces are returned to the area where the blank is formed initially. The cracker blanks separated in such a way are passed to proofing. After the proofing, the articles are baked and the structure thereof is cooled to a temperature of 18-250C. Next, the surfaces of crackers are moistened with water or oil by means of sprayers, food and/or flavouring additives are added. Subsequently, the structure of the three-dimensional product, with sprayed over food and/or flavouring additives, is cooled to a temperature of 18-25°C, is dried to a relative humidity of 0-20% and packaged.

### Embodiment 3

To realize the claimed method for manufacturing thin Armenian lavash bread the technology of automated line is employed as well, which is described as follows. Previously prepared dough is used to form a flat lavash blank which is successively rolled out to the thickness of 0.5-1.5mm with further stretching it to the specified width. Before cutting, the whole surface of the strip dough blank is pierced with a fine pitch among punctures, and then the blank is cut into small pieces of predetermined shape for crackers to be made. Next, the cracker blanks are passed to proofing and then baked. In the process of baking, the flat surface of crackers is covered with a thick layer of bubbles owing to a multitude of punctures on it.

Further, the structure of crackers is cooled to a temperature of 18-25°C and the surfaces of crackers are moistened with water or oil by means of sprayers, food and/or flavouring additives are added. Afterwards, the structure of the product with sprayed over food and/or flavouring additives is cooled to a temperature of 18-25°C again, is dried to a relative humidity of 0-20%. Finally, the finished articles are packaged.

### Examples of the preferred embodiments of the claimed method

### Example 1

Previously prepared unleavened dough is loaded into the receiving bin of the automated line for manufacturing thin Armenian lavash bread wherein a flat dough blank is formed in the shape of, for instance, a continuous strip which is successively rolled out at several stages in order to get a predetermined thickness of 0.5-1.5 mm with further stretching the blank to the specified width, for example 600 mm.

Subsequently, the strip dough blank is formed depending on the shape of future three-dimensional crackers and the blank is cut by means of shear mechanisms into small pieces, for instance in the shape of ellipsoid. The rest pieces are returned to the area where the blank is formed initially. The cracker blanks separated in such a way are passed to proofing which is performed at a temperature of 400C during 25-75 seconds. Then, the dough blank is baked in the tunnel oven at a temperature of250-2800C during 30-60 seconds, wherein hollow three-dimensional crackers are formed. The baked crackers are cooled in the course of 5-20 seconds to a temperature of 18-250C. Next, the surfaces of crackers are moistened with water by means of sprayers in the form of atomizers and food and/or flavouring additives are added with the help of dispensing apparatuses and sprayers. To secure the attachment of food and/or flavouring additives on the surface of three-dimensional crackers, the crackers are cooled to a temperature of 18-25°C and dried to a relative humidity of 4-7%. Finally, the three-dimensional end products are packaged.

### Example 2

Previously prepared sponge dough is loaded into the receiving bins of two automated lines for manufacturing thin Armenian lavash bread wherein two flat dough blanks are formed simultaneously in the shape of, for instance, a continuous strip. Then, the blanks are successively rolled out at several stages in order to get a predetermined thickness of 0.5-1.5mm with further stretching the blank to the specified width, for example 600mm. In so doing, the surfaces of strip dough blanks are sprinkled with flour.

Thereafter, two strip dough blanks are joined one to another, namely, a two-layer dough blank is formed. Next, the last-named blank is cut into small pieces in the shape of square with dimensions 3x3 centimetres, and in the process of cutting the edges of blanks are stuck together. Afterwards, the cracker blanks are passed to proofing where they are held 15-25 seconds at 400C. Then, the blank is baked at a temperature of 250-2800C during 55-75 seconds, wherein hollow three-dimensional crackers are formed in the shape of cushions. The structure of crackers is cooled in the course of 20-40 seconds to a temperature of 18-250C and the surfaces of crackers are moistened with oil and food and/or flavouring additives are added. After the application of food and/or flavouring additives the end products are cooled to a temperature of 18-25°C and dried to a relative humidity of 5-8%. Finally, the three-dimensional finished articles are packaged.

### Example 3

Previously prepared yeast-leavened dough is loaded into the receiving bin of the automated line for manufacturing thin Armenian lavash bread wherein a flat dough blank is formed in the shape of, for instance, a continuous strip which is successively rolled out at several stages in order to get a predetermined thickness of 0.5-1.5mm with further stretching the blank to the specified width, for example 600mm. Subsequently, the whole surface of the strip dough blank is pierced with a fine pitch among punctures, and then the blank is cut into small pieces of predetermined shape for crackers to be made. Next, the pieces are passed to proofing where they are held 0-8 minutes at 25-400C.Then, the cracker pieces are baked at a temperature of 250-2800C during 55-75 seconds and in the process of baking a multitude of bubbles is formed on the flat surface of crackers.

Next, the structure of crackers is cooled to a temperature of 18-250C, and the surfaces of crackers are moistened with oil by means of sprayers and food and/or flavouring additives are added. Thereafter, the structure of flat crackers with added food and/or flavouring additives is cooled to a temperature of 18-25°C and dried to a relative humidity of 6%. Finally, the end products are packaged.

While the invention has been described herein in terms of the preferred embodiments, numerous variations may be made without departing from the invention as set forth in the appended claims.

## Claims

1. A method for manufacturing crackers from thin Armenian lavash bread, wherein a flat strip dough blank is formed and manufactured, said blank is rolled out to predetermined forms, said blank is cut by means of shear mechanisms into blank pieces, and the pieces remaining after cutting are, if necessary, returned to the area where the said blank is initially formed; said blank pieces are baked and cooled, the surface of said blank pieces is moistened, the structure of said blank pieces is stabilised, and the end product is packaged **characterised in that**:
- said strip dough blank is additionally stretched widthwise;
- said strip dough blank is additionally cut into small blank pieces of the predetermined form;
- said blank pieces are passed to proofing where said blank pieces are then baked and cooled to a temperature of 18-25°C;
- said blank pieces are moistened with water or oil and food or flavouring additives are added;
- the structure of said blank pieces is cooled to a temperature of 18-25°C;
- said blank pieces are dried to a relative humidity of 0-20%.

2. A method according to Claim 1, **characterised in that** two strips of flat dough blank, the surfaces thereof being floured, are supplied simultaneously and are joined one to another and thus form a two-layer blank which is further cut into small blank pieces, the edges of which are stuck together in the process of cutting, then said manufacturing method is realized.

3. A method according to Claim 1, **characterised in that**
- the whole surface of said strip dough blank is pierced; then
- said blank is cut into blank pieces of predetermined shape; next
- said blank pieces are passed to proofing; thereafter
- said blank pieces are baked and cooled to a temperature of 18-25°C; afterwards
- said blank pieces are additionally moistened with water or oil and food or flavouring additives are added; subsequently
- the structure of said flat blank pieces is cooled to a temperature of 18-25°C; and
- said blank pieces are dried to a relative humidity of 0-20%.

4. A method according to Claims 1-3, **characterised in that** said crackers are manufactured from unleavened, yeast-leavened or sponge dough.

5. A method according to Claims 1-3, **characterised in that** said crackers are manufactured in the shape of circle, rectangle, triangle, oval, sphere, ellipsoid, cube, cushion, and other non-geometric forms.
